(19) Europäisches Patentamt
European Patent Office
Office européen des brevets

(11) **EP 1 294 599 B1**

(12) **EUROPÄISCHE PATENTSCHRIFT**

(45) Veröffentlichungstag und Bekanntmachung des Hinweises auf die Patenterteilung:
**02.02.2011 Patentblatt 2011/05**

(21) Anmeldenummer: **01936408.2**

(22) Anmeldetag: **30.05.2001**

(51) Int Cl.:
***B60T 8/17*** *(2006.01)*

(86) Internationale Anmeldenummer:
**PCT/EP2001/006137**

(87) Internationale Veröffentlichungsnummer:
**WO 2001/096160 (20.12.2001 Gazette 2001/51)**

(54) **VERFAHREN ZUR VERBESSERUNG DES REGELVERHALTENS EINES ABS**

METHOD FOR IMPROVING THE CONTROLLING ACTION OF AN ABS

PROCEDE POUR L'AMELIORATION DU COMPORTEMENT DE REGULATION D'UN SYSTEME ABS

(84) Benannte Vertragsstaaten:
**DE FR IT**

(30) Priorität: **16.06.2000 DE 10050866**

(43) Veröffentlichungstag der Anmeldung:
**26.03.2003 Patentblatt 2003/13**

(73) Patentinhaber: **Continental Teves AG & Co. oHG 60488 Frankfurt (DE)**

(72) Erfinder:
• **BURKHARD, Dieter 55411 Bingen-Büdelheim (DE)**
• **MAHLO, Rüdiger 61462 Königstein (DE)**

(56) Entgegenhaltungen:
**EP-A- 0 341 866     EP-A- 0 441 122
DE-A- 3 610 186     US-A- 6 041 277**

EP 1 294 599 B1

**Beschreibung**

Die Erfindung bezieht sich auf ein Verfahren zur Verbesserung des Regelverhaltens eines Bremsensystems mit Blockierschutzregelung beim Auftreten von Fahrbahnstörungen, wie Querrillen, Schlaglöcher, Schwellen etc., bei dem das Drehverhalten der Räder zur Blockierschutzregelung und zum Erkennen der Fahrbahnstörungen beim Einsetzen der Blockierschutzregelung im Anschluss an eine Teilbremsung ausgewertet wird.

Es ist bekannt, dass ABS-Regelsysteme durch Fahrbahnunebenheiten bzw. Fahrbahnstörungen, die während eines Bremsvorgangs (Teilbremsung) auftreten, aktiviert werden, ohne dass oder bevor das eigentliche Blockierdruckniveau erreicht wird. Dies führt als erstes zu einem unerwünschten Bremsdruckabbau am betroffenen Rad, gefolgt von einem gepulsten oder schrittweisen Bremsdruckwiederaufbau, dadurch zu unnötiger Bremsventilbetätigung verbunden mit störenden Ventilgeräuschen und Komforteinbußen sowie in bestimmten Situationen zu einem Verzögerungsverlust des Fahrzeugs bzw. zur Bremswegverlängerung, da in der Bremsdruckaufbauphase, die dem Bremsdruckabbau infolge der Fahrbahnstörung folgt, das ursprüngliche Bremsdruckniveau nur mit Zeitverzug wieder erreicht wird.

Aus der DE 195 36 105 A1 ist bereits ein Verfahren zur Verbesserung des Regelverhaltens eines Antiblokkiersystems (ABS) infolge einer Fahrbahn-Einzelstörung bekannt, bei dem aus dem maximalen Radschlupf, der als Folge der Fahrbahnstörung am betroffenen Rad auftritt, und aus der Dauer des Druckabbaus bis zur Wiederbeschleunigung des Rades auf eine Fahrbahnstörung geschlossen wird. Beim Erkennen der Fahrbahn-Einzelstörung wird dann der Bremsdruck an dem Rad, an dem die Einzelstörung auftritt, bis zum Unterschreiten eines vorgegebenen Grenzwertes der Radbeschleunigung wieder aufgebaut.

Des weiteren ist es aus der DE 195 30 902 A1 bekannt, bei einer starken Radaufstandskraftverringerung infolge eines Sprungbügels oder einer sich ähnlich auswirkenden Fahrbahnstörung, wenn der Bremsschlupf einen vorgegebenen Grenzwert überschreitet und eine Mindestzeitspanne andauert, das Produkt aus dem maximalen Bremsschlupf und der Zeitspanne vom Beginn der Instabilität bis zum Radumkehrpunkt, d.h. der Wiederbeschleunigung, zu bilden und, wenn das Produkt einen Grenzwert überschreitet, in der anschließenden Druckaufbauphase den Bremsdruckaufbaugradienten zu erhöhen.

Die US-A-6 041 277 offenbart ebenfalls ein Verfahren zur Erkennung von Fahrbahnstörungen in einem Bremsensystem mit Blockierschutzregelung, jedoch wird als Erkennungskriterium im Anschluß einer Teilbremsung ein radindividueller Quotient herangezogen, welcher aus dem maximalen Bremsschlupf und der Dauer des Druckabbaus bis zur Wiederbeschleunigung dieses Rades gebildet wird. Wenn dieser Quotient einen vorgegebenen Grenzwert überschreitet, wird eine Einzelstörung angenommen.

Der vorliegenden Erfindung liegt nun die Aufgabe zugrunde, eine weitere Maßnahme zur Verbesserung des Regelverhaltens beim Auftreten von Fahrbahnstörungen zu entwickeln, um in allen Situationen zuverlässig eine Einbuße an Bremsleistung infolge der Fahrbahnstörungen auszuschließen.

Es hat sich herausgestellt, dass diese Aufgabe mit dem im Anspruch 1 beschriebenen Verfahren gelöst werden kann.

Einige besonders vorteilhafte Ausführungsbeispiele der Erfindung sind in den beigefügten Unteransprüchen beschrieben. So hat es sich in manchen Anwendungsfällen als besonders günstig erwiesen, das Überschreiten eines Grenzwertes (TH) nach der Beziehung

$$t_{abbau}/T \quad x \quad A_{cc} \quad > \quad TH_1$$

oder

$$t_{abbau}/T \quad x \quad A_{ccmax} \quad > \quad TH_2$$

zur Erkennung einer Fahrbahnstörung auszuwerten, wobei mit $t_{abbau}$ die Zeitdauer des Druckabbaus, mit T die Zeitdauer der Druckabbauphase, mit $A_{cc}$ die Wiederbeschleunigung des Rades und mit $A_{ccmax}$ der Spitzenwert der Wiederbeschleunigung bezeichnet sind.

Nach einem anderen Ausführungsbeispiel ist die Änderung der Wiederbeschleunigung maßgebend. In diesem Fall wird das Überschreiten eines Grenzwertes nach der Beziehung

$$A_{ccp}' \quad > \quad TH_3$$

oder

$$A_{ccpmax}' > TH_4$$

zur Erkennung einer Fahrbahnstörung ausgewertet, wobei mit , mit $A_{cc}'$ die Wiederbeschleunigungänderung des Rades und mit $A_{ccmax}'$ der Spitzenwert der Wiederbeschleunigungänderung bezeichnet sind.

Weitere Einzelheiten, Merkmale und Anwendungsmöglichkeiten der Erfindung gehen aus der folgenden Beschreibung eines Ausführungsbeispiels der Erfindung anhand der beigefügten Abbildungen hervor.

Es zeigen:

Fig. 1 im Diagramm die Fahrzeugreferenz- und Radgeschwin- digkeit, die Radbeschleunigung, die Änderung der Radbeschleunigung und den Verlauf des Radbremsdru- ckes bei einem Bremsvorgang, bei dem das erfindungsgemäße Verfahren zur Anwendung gelangt, und

Fig. 2 im Flow Chart den Entscheidungsablauf zur Erken- nung einer Fahrbahnstörung, und die Gegenreaktion.

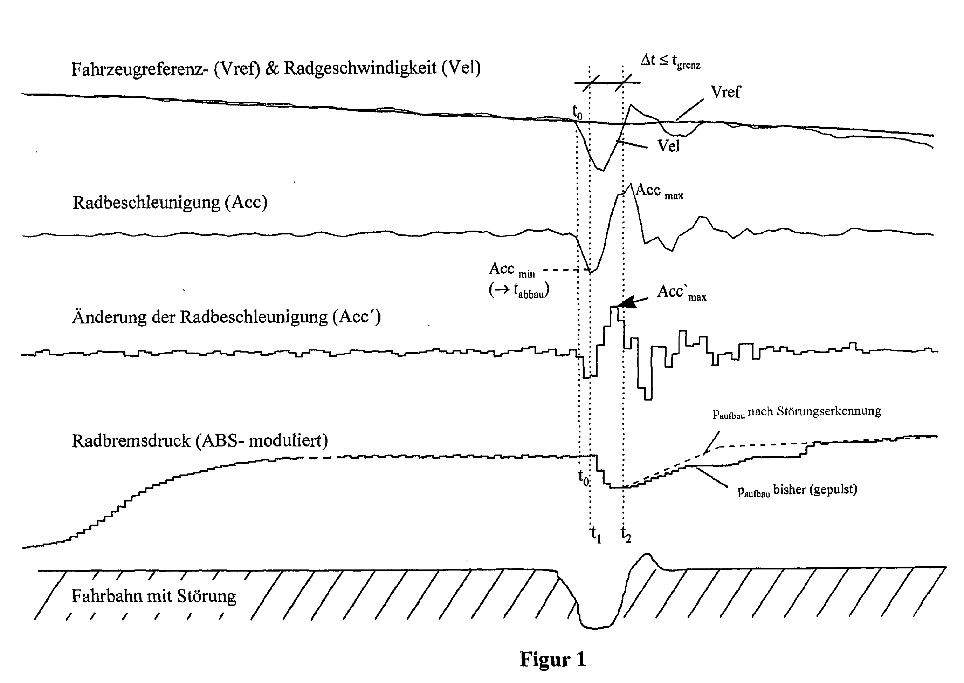

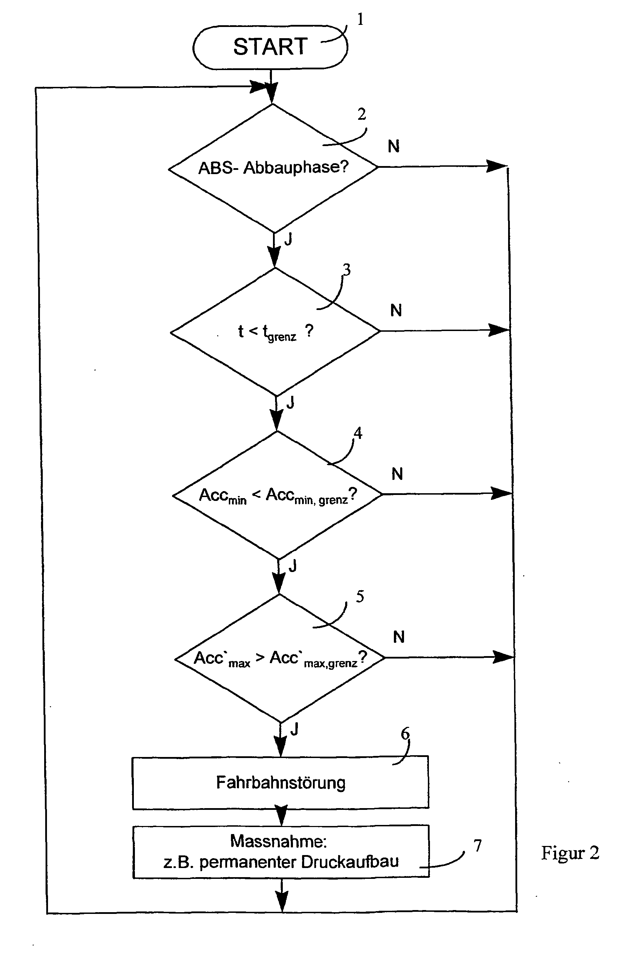

Die folgenden Erläuterung unter Zuhilfenahme der Diagramme und des Flow Charts nach den Fig. 1 und 2 beziehen sich auf ein willkürliches Beispiel einer Fahrbahnstörung, bei der die durch das erfindungsgemäße Verfahren erreichte Verbesserung des Regelverhaltens zum Tragen kommt. Es handelt sich in diesem Fall bei der Fahrbahnstörung um ein Schlagloch, wie dies in der untersten Zeile der Fig. 1 angedeutet ist.

Bei einer Erhebung, einer Schwelle oder einem Hindernis auf der Fahrbahn, verhält sich das Rad sehr ähnlich. Die charakteristische Verzögerung gefolgt von einer hohen Beschleunigung ist wiederum zu beobachten. Das erfindungsgemäße Verfahren reagiert nach dem Erkennen des Hindernisses in gleicher Weise durch schnellen Druckaufbau zur Kompensation des als Folge der Fahrbahnstörung hervorgerufenen Bremsdruckabbaus.

In Fig. 1 sind über dem gleichen Zeitmaßstab bzw. Zeitablauf die Fahrzeugreferenzgeschwindigkeit Vref (oberste Kurve: die annähernd ungestört verlaufende Kennlinie), die Radgeschwindigkeit Vel, ferner die Radbeschleunigung Acc und die Änderung der Radbeschleunigung Acc' (der sogenannte Ruck) und schließlich der Bremsdruckverlauf an dem betrachteten, über ein Schlagloch hinweg rollenden Rad dargestellt; gezeigt ist der Bremsdruckverlauf im "Normalmodus" sowie der schnelle Bremsdruckwiederaufbau (gestrichelte Kennlinie) nach Störungserkennung mit Hilfe der erfindungsgemäß ausgewerteten Kriterien.

Wie Fig. 1 veranschaulicht, beginnt etwa zum Zeitpunkt $t_0$ die Auswirkung einer Fahrbahnstörung, hier eines Schlaglochs. Die Fahrzeugreferenzgeschwindigkeit, die unter Einbeziehung aller Fahrzeugräder gebildet wird, bleibt unbeeinflusst, während der Geschwindigkeitsverlauf Vel am betroffenen Rad einen Einbruch erleidet und eine hohe Radbeschleunigung Acc und Radbeschleunigungsänderung Acc' festzustellen sind. Als Folge der hohen Radbeschleunigung Acc setzt zum Zeitpunkt $t_1$ die Blockierschutzregelung ein bzw. geht die Teilbremsung in einen ABS-geregelten Bremsvorgang über.

Die Fahrbahnstörung führt also zu einer Bremsdruckabbauphase, die etwa zum Zeitpunkt $t_1$ beginnt und zum Zeitpunkt $t_2$ endet. Nach einem Standardregelmodus würde der Bremsdruck im Anschluss an $t_2$ relativ langsam bis zum Erreichen des durch den Fahrervordruck vorgegebenen Niveaus oder bis zum Blockierdruckniveau erhöht werden. Ein solcher Verlauf ist in der untersten Kennlinie mit "$P_{aufbau}$ bisher(gepulst)" bezeichnet. Beim Erkennen einer Fahrbahnstörung wird dagegen erfindungsgemäß der Bremsdruck mit erhöhter Geschwindigkeit oder erhöhtem Gradienten, wie dies die gestrichelte Kennlinie "$P_{aufbau}$ nach Störungerkennung" zeigt, wieder auf das vorgegebene Niveau oder das Blockierdruckniveau angehoben.

Zum Erkennen einer Fahrbahnstörung wird erfindungsgemäß der in der Fig. 1 dargestellte Radverlauf analysiert. Die für eine ABS-Regelung untypischen Radschlupfverläufe innerhalb der ersten Druckabbauphase lassen eine Mustererkennung dieser Radsituation zu. Zum Zeitpunkt der Fahrbahnstörung (Stoßanregung), etwa zum Zeitpunkt $t_0$ nach Fig. 1, kommt es am gebremsten Rad zu einem Reibwertverlust, gefolgt von einer hohen, zunehmenden Radverzögerung. Dieser Umstand bewirkt einen lang dimensionierten Initialpuls, der eine ungewöhnlich hohe Radwiederbeschleunigung oder Spitzenbeschleunigung bzw. Änderung der Beschleunigung pro Zeiteinheit ermöglicht. Außerdem ist die kurze Dauer der Druckabbauphase im ersten Regelzyklus typisch für ein Schlagloch oder für eine impulsartige Fahrbahnstörung.

Zur Erkennung einer Fahrbahnstörung und für ein durch Fahrbahnstörungen hervorgerufenes Regelverhalten sind folgende Messgrößen und Parameter von Bedeutung:

Radbeschleunigung $A_{cc}$ ;
Radspitzenbeschleunigung $A_{ccp}$ (oder $A_{ccmax}$) ;
Änderung der Radbeschleunigung pro Zeiteinheit $A_{cc}'$ ;
Spitzenwert der zeitlichen Änderung der Radbeschleunigung $A_{ccp}'$ (oder $A_{ccmax}'$) ;

Länge oder Dauer der Druckabbauphase T (oder $\Delta t$) ;
Die Zeit $t_{abbau}$ oder die Anzahl der Loops (bei einem taktgesteuerten System), in denen ein Druckabbau stattfindet;
Regelungseintritt (Einsetzen der ABS-Regelung);
Einsetzen des Druckabbaus am Rad.

Zur Erkennung einer Fahrbahnstörung wird erfindungsgemäß ein charakteristischer Radverlauf nach den im folgenden beschriebenen Algorithmen und Bedingungen identifiziert:

Bei einem speziellen Ausführungsbeispiel der Erfindung auf Basis eines ABS-Regelungssystems mit Steuerung des Bremsdruckverlaufs durch Bremsdruckaufbau- und -abbaupulse werden die folgende Bedingungen und Kriterien zur Erkennung der Fahrbahnstörung und Beeinflussung des Druckverlaufes auf Basis des erfindungsgemäßen Verfahrens abgefragt:

-    Erkennung des Übergangs von einer Teilbremsung zur Blokkierschutzregelung (Regelungseintritt)
-    "kurze" Druckabbauphase am betroffenen Rad; die Abbauphase ist in dem Beispiel kleiner als etwa 40 ms und
-    Radwiederbeschleunigung in Abhängigkeit vom Druckabbau überschreitet den Grenzwert $TH_1$ oder $TH_2$ nach der Beziehung:

$$t_{abbau}/T \quad x \quad A_{cc} \quad > \quad TH_1$$

oder

$$t_{abbau}/T \quad x \quad A_{ccmax} \quad > \quad TH_2$$

oder

-    zeitliche Änderung der Radwiederbeschleunigung überschreitet einen Grenzwert $TH_3$ bzw. $TH_4$ nach der Beziehung:

$$A_{ccp}' \quad > \quad TH_3$$

oder

$$A_{ccpmax}' \quad > \quad TH_4$$

Üblicherweise werden die vorgenannten Zeitbedingungen mit Hilfe von Zählern erfasst, die in Arbeitstakt, der beispielsweise in einem Bereich zwischen 5 oder 7 ms liegt.

Fig. 2 dient ebenfalls zur Veranschaulichung des erfindungsgemäßen Verfahrens und zeigt die Schrittfolge und logische Verknüpfung der einzelnen Bedingungen, die zur Erkennung von Fahrbahnstörung führen.

Nach dem Start (1) wird in (2) festgestellt, dass die Teilbremsung in eine Blockierschutzregelung eingetreten ist: Die "ABS-Abbauphase" setzt ein. Ist die Druckabbauphase nach einer Zeitdauer t bzw. vor einem Zeitpunkt $t_{grenz}$ beendet

$$t \quad < \quad t_{grenz} \quad ? \qquad\qquad (3)$$

und wird eine hohe Radverzögerung

$$A_{ccmin} < A_{ccmin\ grenz} \ ? \qquad\qquad (4),$$

gefolgt von einer hohen Wiederbeschleunigung

$$A_{cc'max} > A_{cc'max\ grenz} \ ? \qquad\qquad (5),$$

ermittelt, wobei vorgegebene Grenzwerte (TH) überschritten wurden, wird schließlich das Vorliegen einer

$$\text{"Fahrbahnstörung"} \qquad\qquad (6)$$

erkannt, die zur Maßnahme

$$\text{"permanenter Druckaufbau"} \qquad\qquad (7)$$

im Gegensatz zu dem pulsförmigen Druckaufbau im Standardmodus führt. Dadurch wird die Verbesserung des Regelverhaltens erreicht, auf die die Erfindung zielt.

In den Stufen 4 und 5 des Programmlaufs nach Fig. 2 wird also die Radverzögerung oder (negative) Beschleunigung des überwachten Rades "$A_{ccmin}$" mit dem errechneten Grenzwert "$A_{ccmin.grenz}$" verglichen. Liegt die (negative) Beschleunigung "$A_{ccmin}$" unter diesem Grenzwert ("Ja" nach Schritt 4) erfolgt in dem Ausführungsbeispiel nach Fig. 2 eine weitere Abfrage, in der festgestellt wird, ob in der Wiederbeschleunigungsphase der Maximalwert der zeitlichen Änderung der Beschleunigung $A_{ccmax}'$ über dem errechneten Grenzwert $A_{ccmax.grenz}'$ liegt. Wenn ja, hat dies eine Erkennung bei einer Fahrbahnstörung zufolge.

Die Verwirklichung des erfindungsgemäßen Verfahrens ist je nach Auslegung und Aufbau des Regelungssystems in verschiedener Weise möglich. Entscheidend ist in jedem Fall, dass

- die Dauer der Druckaufbauphase,
- die Dauer des Druckabbaus, die letztlich durch das Maß der Radverzögerung bedingt sind,
- die Radwiederbeschleunigung, die maximale Radwiederbeschleunigung oder die zeitlichen Änderung der Radwiederbeschleunigung oder des Maximalwertes

zur Beurteilung herangezogen werden. Die Überschreitung der vorgenannten Grenzwerte lässt dann mit hoher Sicherheit auf das Vorliegen einer Fahrbahnstörung schließen, deren Einfluss auf das Regelverhalten danach durch erhöhten oder beschleunigten Druckaufbau gemindert oder eliminiert wird.

**Patentansprüche**

1. Verfahren zur Verbesserung des Regelverhaltens eines Bremsensystems (ABS) mit Blockierschutzregelung beim Auftreten von Fahrbahnstörungen, wie Querrillen, Schlaglöcher, Schwellen etc., bei dem das Drehverhalten der Räder zur Blockierschutzregelung und zum Erkennen der Fahrbahnstörungen beim Einsetzen der Blockierschutzregelung im Anschluss an eine Teilbremsung ausgewertet wird, **dadurch gekennzeichnet, dass** eine kurzdauernde Bremsdruckabbauphase (T) mit starkem Bremsdruckabbau an einem Rad als Folge hoher Radverzögerung oder Radbeschleunigung, gefolgt von einer hohen Wiederbeschleunigung des Rades, als Fahrbahnstörung interpretiert wird,

A) wenn der Quotient aus der Zeitdauer des Druckabbaus ($t_{Abbau}$) und der Gesamtdauer der Druckabbauphase (T) multipliziert mit

A1) der Wiederbeschleunigung ($A_{cc}$) des Rades oder
A2) dem Spitzenwert der Wiederbeschleunigung ($A_{ccmax}$) oder

B) wenn die Wiederbeschleunigungsänderung ($A_{cc}$') oder der Spitzenwert der Wiederbeschleunigungsänderung ($A_{cc-max}$') vorgegebene Grenzwerte (TH) überschreiten, und dass als Folge der Erkennung der Fahrbahnstörung ein im Vergleich zur Standard-ABS-Regelung erhöhter Bremsdruckanstieg hervorgerufen wird.

**2.** Verfahren nach Anspruch 1, **dadurch gekennzeichnet, dass** das Überschreiten eines Grenzwertes (TH) nach der Beziehung

$$t_{abbau}/T \quad x \quad A_{cc} \quad > \quad TH_1$$

oder

$$t_{abbau}/T \quad x \quad A_{ccmax} \quad > \quad TH_2$$

zur Erkennung einer Fahrbahnstörung ausgewertet wird, wobei mit $t_{abbau}$ die Zeitdauer des Druckabbaus, mit T die Zeitdauer der Druckabbauphase, mit $A_{cc}$ die Wiederbeschleunigung des Rades und mit $A_{ccmax}$ der Spitzenwert der Wiederbeschleunigung bezeichnet sind.

**3.** Verfahren nach Anspruch 1 oder 2, **dadurch gekennzeichnet, dass** eine Dauer der Bremsdruckabbauphase ($t_{Abbau}$), die kleiner ist als ein vorgegebenener Grenzwert (TH) in der Größenordnung von 20-100 ms, insbesondere 30 - 50 ms ist, als Hinweis auf eine Fahrbahnstörung interpretiert wird.

**4.** Verfahren nach Anspruch 1, **dadurch gekennzeichnet, dass** das Überschreiten eines Grenzwertes nach der Beziehung

$$A_{ccp}' \quad > \quad TH_3$$

oder

$$A_{ccpmax}' \quad > \quad TH_4$$

zur Erkennung einer Fahrbahnstörung ausgewertet wird, wobei mit $A_{cc}$' die Wiederbeschleunigungänderung des Rades und mit $A_{ccmax}$' der Spitzenwert der Wiederbeschleunigungänderung bezeichnet sind.

**Claims**

**1.** Method for improving the controlling action of a brake system (ABS) with anti-lock braking control when imperfections occur in the carriageway, such as lateral grooves, potholes, ridges etc., in which method the rotational behaviour of the wheels is evaluated in order to perform anti-lock braking control and to detect the imperfections in the carriageway when the anti-lock braking control starts, subsequent to partial braking, **characterized in that** a brief brake pressure reduction phase (T) with a pronounced reduction in brake pressure at a wheel as a consequence of strong deceleration of the wheel or acceleration of the wheel, followed by strong re-acceleration of the wheel, is interpreted as being an imperfection in the carriageway,

A) if the quotient between the duration of the reduction in pressure ($t_{reduc}$) and the total duration of the pressure reduction phase (T) multiplied by

A1) the re-acceleration ($A_{cc}$) of the wheel or
A2) the peak value of the re-acceleration ($A_{ccmax}$) or

B) if the re-acceleration change ($A_{cc}$') or the peak value of the re-acceleration change ($A_{ccmax}$') exceeds predefined limiting vales (TH), and **in that** a rise in brake pressure, which is increased compared to the standard ABS braking control, is brought about as a consequence of the detection of the imperfection in the carriageway.

2. Method according to Claim 1, **characterized in that** the exceeding of a limiting value (TH) is evaluated according to the relationship

$$t_{reduc}/T \times A_{cc} \quad > \quad TH_1$$

or

$$t_{reduc}/T \times A_{ccmax} \quad > \quad TH_2$$

in order to detect an imperfection in the carriageway, where $t_{reduc}$ denotes the duration of the reduction in pressure, T denotes the duration of the pressure reduction phase, $A_{cc}$ denotes the re-acceleration of the wheel and $A_{ccmax}$ denotes the peak value of the re-acceleration.

3. Method according to Claim 1 or 2, **characterized in that** a duration of the brake pressure reduction phase ($T_{reduc}$) which is smaller than a predefined limiting value (TH) of the order of magnitude of 20-100 ms, in particular 30-50 ms, is interpreted as being an indication of an imperfection in the carriageway.

4. Method according to Claim 1, **characterized in that** the exceeding of a limiting value is evaluated according to the relationship

$$A_{ccp}' \quad > \quad TH_3$$

or

$$A_{ccpmax}' \quad > \quad TH_4$$

in order to detect an imperfection in the carriageway, where $A_{cc}'$ denotes the re-acceleration change of the wheel and $A_{ccmax}'$ denotes the peak value of the re-acceleration change.

**Revendications**

1. Procédé pour améliorer le comportement de régulation d'un système de freinage (ABS) avec régulation de protection antiblocage en cas de défauts de la chaussée, tels que des rainures transversales, des nids de poule, des seuils, etc., selon lequel le comportement de rotation des roues est interprété pour réguler la protection antiblocage et pour détecter les défauts de la chaussée lors de l'application de la régulation de protection antiblocage suite à un freinage partiel, **caractérisé en ce qu'**une phase de réduction de la pression de freinage (T) de courte durée avec une forte réduction de la pression de freinage au niveau d'une roue consécutive à un fort ralentissement de la roue ou à une forte accélération de la roue, suivie par une réaccélération élevée de la roue, est interprétée comme un défaut de la chaussée,

A) lorsque le quotient de la durée de la réduction de la pression ($t_{Abbau}$) par la durée totale de la phase de réduction de la pression (T) multiplié par

A1) la réaccélération ($A_{cc}$) de la roue ou
A2) la valeur de crête de la réaccélération ($A_{ccmax}$) ou

B) lorsque la modification de la réaccélération ($A_{cc}$') ou la valeur de crête de la modification de la réaccélération ($A_{ccmax}$') dépassent des valeurs limites (TH) prédéfinies, et **en ce qu'**une pression accrue de freinage par rapport à la régulation ABS standard est provoquée en conséquence de la détection d'un défaut de la chaussée.

2. Procédé selon la revendication 1, **caractérisé en ce que** le dépassement d'une valeur limite (TH) est interprété selon l'équation

$$t_{abbau}/T \ X \ A_{cc} \ > \ TH_1$$

ou

$$t_{abbau}/T \ X \ A_{ccmax} \ > \ TH_2$$

pour détecter un défaut de la chaussée, $t_{abbau}$ désignant la durée de réduction de la pression, T la durée de la phase de réduction de la pression, $A_{cc}$ la réaccélération de la roue et $A_{ccmax}$ la valeur de crête de la réaccélération.

3. Procédé selon la revendication 1 ou 2, **caractérisé en ce qu'**une durée de la phase de réduction de la pression de freinage ($t_{abbau}$) qui est inférieure à une valeur limite (TH) prédéfinie de l'ordre de 20-100 ms, notamment de 30-50 ms, est interprétée comme une indication d'un défaut de la chaussée.

4. Procédé selon la revendication 1, **caractérisé en ce que** le dépassement d'une valeur limite est interprété selon l'équation

$$A_{ccp}' \ > \ TH_3$$

ou

$$A_{ccpmax}' \ > \ TH_4$$

pour détecter un défaut de la chaussée, $A_{cc}$' désignant la modification de la réaccélération de la roue et $A_{ccmax}$' la valeur de crête de la modification de la réaccélération.

Fahrzeugreferenz- (Vref) & Radgeschwindigkeit (Vel)

$\Delta t \leq t_{grenz}$

$t_0$

Vref

Vel

Radbeschleunigung (Acc)

$Acc_{max}$

$Acc_{min}$ - - -
($\rightarrow t_{abbau}$)

Änderung der Radbeschleunigung (Acc´)

$Acc´_{max}$

Radbremsdruck (ABS- moduliert)

$P_{aufbau}$ nach Störungserkennung

$t_0$

$P_{aufbau}$ bisher (gepulst)

$t_1$  $t_2$

Fahrbahn mit Störung

**Figur 1**

EP 1 294 599 B1

Figur 2

START — 1

ABS- Abbauphase? — 2
N →

J ↓

$t < t_{grenz}$ ? — 3
N →

J ↓

$Acc_{min} < Acc_{min, grenz}$? — 4
N →

J ↓

$Acc`_{max} > Acc`_{max,grenz}$? — 5
N →

J ↓

Fahrbahnstörung — 6

Massnahme:
z.B. permanenter Druckaufbau — 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19536105 A1
- DE 19530902 A1

- US 6041277 A